# EUROPEAN PATENT SPECIFICATION

(11) **EP 2 827 744 B1**
(45) Date of publication and mention of the grant of the patent: **10.05.2017**
(21) Application number: 13710848.6
(22) Date of filing: 19.03.2013
(51) Int. Cl.: B32B 37/12, A47B 96/02, A47B 96/20, B32B 7/12, B32B 15/04, B32B 15/12, B32B 3/28

(54) **ULTRA-THIN SHELF FOR DISPLAYING ARTICLES, CONFIGURED TO BE MOUNTED ON A SHELVING DEVICE**
ULTRADÜNNE, ZUR MONTAGE AN EINER REGALVORRICHTUNG KONFIGURIERTE, ABLAGE ZUM AUSSTELLEN VON ARTIKELN
ÉTAGÈRE ULTRA-MINCE PERMETTANT DE PRÉSENTER DES ARTICLES, CONFIGURÉE POUR ÊTRE MONTÉE SUR UN DISPOSITIF DE RAYONNAGE

(30) Priority: 19.03.2012 EP 12305324
(43) Date of publication of application: 28.01.2015
(73) Proprietor: HMY Group, 89470 Moneteau (FR)
(72) Inventor: HERVIEUX, Philippe, 89113 Fleury la Vallée (FR)
(74) Representative: Santarelli
(86) International application number: PCT/EP2013/055696
(87) International publication number: WO 2013/139792

(56) References cited:
- WO-A1-03/037619
- CN-Y- 2 260 702
- US-A- 6 080 495
- US-A1- 2004 091 722

## Description

### FIELD OF THE INVENTION

The invention relates to shelves for displaying articles, configured to be mounted on a shelving device.

The invention further relates to a method for manufacturing such shelves.

### BACKGROUND ART

Shelving devices comprising a plurality of shelves for displaying articles are well known from the European patent application EP 1 988 801 in which the shelving device, also named gondola, comprises a base, a plurality of vertical columns which extend from the base and a plurality of shelves, also named sales shelves, each mounted on two successive vertical columns.

Many articles are resting on the shelves so that the latter have to bear the weight of these articles, which weight can be heavy. The shelves have thus to be substantially rigid and must tolerate a shear stress which is high.

The shelves are generally each formed by a metal plate having the features mentioned above and thus allowing to be loaded with many articles. To obtain these features, the plate has a sufficient thickness, for instance between around 0.6mm to 1.5mm.

The price of raw material increases, in particular metal, it is thus needed to find solutions for decreasing the volume of raw material for manufacturing shelves, while maintaining the mechanical features.

The European patent application EP 2 073 668 describes shelves which each comprises a flat metal plate, two lateral reinforcing rods disposed at lateral ends of the metal plate and longitudinal reinforcing rods disposed under the metal plate. The two lateral reinforcing rods and the longitudinal reinforcing rods are fixed to the plate by welding or punching. The metal plate can be thinner than the metal plate described in EP 1 988 801 but sufficiently thick to be welded or punched. For instance, the metal plate described in EP 2 073 668 has a thickness comprised between around 0.5mm to 1.5mm.

An other metal shelf according to the state of the art is known from US 2004/091722 A1.

The invention is directed to a shelf for displaying articles, configured to be mounted on a shelving device, which shelf is simple, compact, economic and easy to manufacture.

### SUMMARY OF THE INVENTION

The invention accordingly provides a shelf for displaying articles, configured to be mounted on a shelving device, wherein said shelf comprises an upper metal sheet, a bearing member facing to at least a major portion of said upper metal sheet, said bearing member being configured to reinforce said upper metal sheet and at least one first adhesive layer disposed between said upper metal sheet and said bearing member, so that said bearing member and said upper metal sheet are fixed together by said at least one first adhesive layer, wherein said shelf further comprising at least one spacer sandwiched between said bearing member and said upper metal sheet and said spacer being formed by a plurality of rolls embedded in said at least one first adhesive layer.

The shelf according to the invention is thus convenient in that the combination of the upper metal sheet and the bearing member, which further acts as a reinforcing member for the upper metal sheet, are simply assembled thanks to a glue composition which forms an adhesive.

It is the use of an upper metal sheet which allows assembling the latter together with the bearing member only thanks to at least one first adhesive layer, without supplemental mechanical member and without subjecting the upper metal sheet to mechanical stresses due to steps of punching or welding.

For that matter, such steps of punching or welding are inconvenient to such an upper metal sheet according to the invention because the upper metal sheet could be deteriorated by the stresses issued from such steps.

The shelf according to the invention is thus different from the shelf described in the state or the art mentioned in the background art of the present application in that the shelf according to the invention comprises at least one spacer sandwiched between said bearing member and said upper metal sheet wherein said spacer being formed by a plurality of rolls embedded in said at least one first adhesive layer.

Thus, the ultra-thin shelf according to the invention is simple, compact, economic and easy to manufacture while having high mechanical features, in particular regarding the shear stresses, which allow the shelf to bear many articles.

According to features preferred as being very simple, convenient and economical for embodying the shelf according to the invention:
- said upper metal sheet has a first thickness between around 0.1 mm and around 0.3mm;
- said shelf further comprises a lower panel which is opposed to said upper metal sheet so that said bearing member is sandwiched between said lower panel and said upper metal sheet;
- said lower panel is formed by a lower metal sheet having a second thickness between around 0.1 mm and around 0.3mm.;
- said shelf further comprises at least one second adhesive layer disposed between said lower panel and said bearing member so that said bearing member and said lower panel are fixed together by said at least one second adhesive layer;
- said shelf further comprises at least one spacer sandwiched between said bearing member and said lower panel;
- said spacer is formed by a plurality of rolls embedded in said second adhesive layer;
- said shelf extends longitudinally and said bearing member comprises a plurality of ripples so that said bearing member has a general corrugated shape which transversally extends to said shelf;
- said bearing member has a general alveolus shape;
- said bearing member is rigid and made from metal;
- said bearing member is semi-rigid and made from cardboard; and/or
- said shelf extends longitudinally and has lateral faces having a right-angled triangle shape.

The invention further provides a shelving device comprising a base, a back panel extending from said base and at least one shelf as described above which is mounted on said back panel and which overhangs said base.

Like the shelf according to the invention, the shelving device comprising such a shelf is particularly simple, convenient and economic.

The invention further provides a method for manufacturing a shelf, comprising the following steps:
- providing an upper metal sheet;
- providing a bearing member configured to reinforce said upper metal sheet;
- providing an adhesive and depositing at least one first layer of said adhesive on at least a major portion of said upper metal sheet and/or on said bearing member; wherein said at least one adhesive layer comprises spacers which are formed by a plurality of rolls embedded in said at least one first adhesive layer
- facing said bearing member to at least a major portion of said upper metal sheet and bringing said bearing member and said upper metal sheet against each other so that said spacers are sandwiched between said bearing member and said upper metal sheet and said bearing member and said upper metal sheet are fixed together by said at least one first adhesive layer.

The use of an upper metal sheet allows assembling the latter together with the bearing member only thanks to at least one first adhesive layer, without mechanical stress like punching or welding.

The method for manufacturing the shelf according to the invention is thus particularly simple to implement, convenient and economic.

According to features preferred as being very simple, convenient and economical for embodying the method according to the invention, it further comprises the following steps:
- providing a lower metal sheet;
- providing an adhesive and depositing at least one second layer of said adhesive on at least a major portion of said lower metal sheet and/or on said bearing member at an opposite side to said at least one first adhesive layer; wherein said at least one second adhesive layer comprises spacers which are formed by a plurality of rolls embedded in said at least one second adhesive layer.
- facing said bearing member to at least a major portion of said lower metal sheet and bringing said bearing member and said lower metal sheet against each other so that said spacers are sandwiched between said bearing member and said lower metal sheet and said bearing member and said lower metal sheet are fixed together by said at least one second adhesive layer.

### BRIEF DESCRIPTION OF THE DRAWINGS

The description of the invention now continues with a detailed description of a preferred embodiment given hereinafter by way of non-limiting example and with reference to the appended drawings. In these drawings:
- Figure 1 is a perspective view of a shelving device comprising a plurality of shelves;
- Figures 2 and 3 are respectively a partial assembled perspective view and a partial exploded perspective view of a shelf shown in Figure 1;
- Figure 4 is a section view taken along IV on Figure 3;
- Figures 5 and 6 are respectively a partial assembled perspective view and a partial exploded perspective view of a variant of the shelf shown in Figure 1; and
- Figure 7 is a section view taken along VII on Figure 6.

### DETAILED DESCRIPTION OF PREFERED EMBODIMENTS

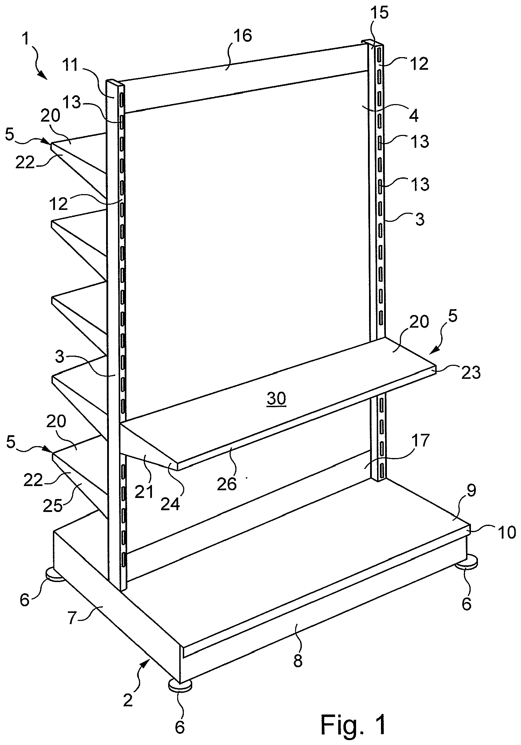

Figure 1 shows a shelving device 1, also named gondola, which is used to display articles (not represented).

The shelving device 1 is configured to be disposed for instance in a supermarket and to receive articles to display for instance for sale.

The shelving device 1 comprises a base 2, two vertical columns 3 extending from the base 2, a back panel 4 also extending from the base 2 and disposed between the two vertical columns 3 and a plurality of shelves 5.

The base 2 is made from metal and comprises horizontal stringers (not represented) which form a frame, four side walls whose only two side walls 7 and 8 are visible on Figure 1 and a panel 9 which covers the frame.

The panel 9 is flat and comprises a ledge 10 extending in front of the side wall 8.

The base 2 further comprises feet 6 whose only three are visible on Figure 1.

The two vertical columns 3 are made from metal and have each a general shape of a rod having a rectangular section.

Each vertical column comprises an exterior lateral face 11, an interior lateral face 15 opposite to the exterior lateral face 11, a front face 12 and a back face (not represented).

A plurality of openings 13 are provided both in the front face 12 and in the back face.

Each opening 13 has a rectangular general shape whose corners are rounded.

The back panel 4 is a flat metal back panel which is sandwiched between the two vertical columns 3.

The back panel 4 comprises a first lateral end and a second lateral end opposite to the first lateral end, which are each mounted on a respective interior lateral face 15 of a vertical column 3.

The back panel 4 further comprises an upper edge and a lower edge opposite to the upper edge, which upper and lower edges come each into abutment against a respective spacer 16, 17 that comprised the shelving device 1.

The spacer 16 is disposed between the two vertical columns 3 and is mounted, like the back panel 4, on the respective interior lateral faces 15 of the vertical columns 3.

This spacer 16 is situated in the vicinity of the respective free ends of the vertical columns 3, opposite to the panel 9 of the base 2.

The spacer 17 is also disposed between the two vertical columns 3 and is mounted, like the back panel 4, on the respective interior lateral face 15 of the vertical columns 3.

The spacer 17 is thus situated at the opposite of the spacer 16, in other words in the vicinity of the respective ends of the vertical column, the ends being opposite to the free ends, and in the vicinity of the panel 9 of the base 2.

As shown in Figure 1, the shelving device 1 comprises a plurality of shelves 5. Here, one shelf 5 is mounted on a front face of the shelving device 1 and five shelves 5 are mounted on the back of the shelving device 1.

Each shelf 5 is configured to be mounted on the back panel 4 and in particular each shelf 5 is configured to be hung to the two vertical columns 3 thanks to hanging members like hooks (not represented), hooks which are configured to be mounted on respective openings 13 of the vertical columns 3.

Each shelf is thus mounted on the back panel 4 so that each shelf 5 overhangs the base 4, and in particular the panel 9.

Each shelf 5 comprises an upper face 20, two lateral faces 21 and 22 which are opposite to each other and a front face 23 linking both lateral faces 21 and 22.

The lateral faces 21 and 22 and the front face 23 are configured to form a roof-deck for the shelf 5.

The upper face 20, the lateral faces 21 and 22 and the front face 23 are made from a single metal sheet 30 which comprises two lateral edges 24 and 25 which are opposite to each other and a front edge 26, all these edges being folded to form the roof-deck.

The upper metal sheet 30 comprises two cut-outs provided respectively at a junction between the lateral edge 24 and the front edge 26 and at a junction between the lateral edge 25 and the front edge 26 in order to allow folding of it to form the roof-deck.

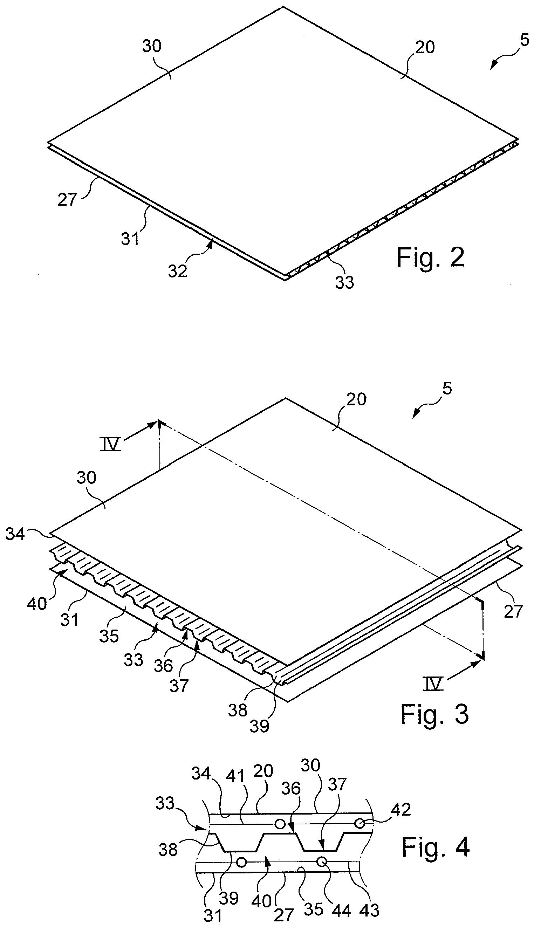

We will now describe in detail the structure of each shelf 5 with respect to Figures 2 to 4.

Figure 2 partially shows the shelf 5 and in particular the upper metal sheet 30 in an assembled state and Figure 3 partially shows the shelf 5 in an exploded state.

Further, Figure 4 partially shows the shelf 5 in section taken along IV on Figure 3.

The shelf 5 further comprises a lower face 27 at the opposite of the upper face 20.

The shelf 5 further comprises a lower metal sheet 31 facing the upper metal sheet 30 and a metal bearing member 33 sandwiched between the upper metal sheet 30 and the lower metal sheet 31.

The upper metal sheet 30 has an exterior face formed by the upper face 20 of the shelf 5 and an interior face 34 at the opposite of the exterior face 20.

The upper metal sheet 30 has a first thickness between around 0.1mm and around 0.3mm. Here, the upper metal sheet 30 has a first thickness equal to around 0.2mm. The upper metal sheet 30 is thus ultra-thin.

The lower metal sheet 31 comprises an exterior face which forms the lower face 27 of the shelf 5 and an interior face 35 at the opposite of the exterior face 27.

The lower metal sheet 31 has a second thickness also between around 0.1mm and around 0.3mm. Here, the lower metal sheet 31 has a second thickness equal to around 0.2mm so that the lower metal sheet 31 is ultra-thin.

The upper metal sheet 30 faces the lower metal sheet 31 and is remote to the latter from a predetermined distance.

Thus, a space 32 is defined between the upper metal sheet 30 and the lower metal sheet 31.

The space 32 has here a constant height so that the upper metal sheet 30 and the lower metal sheet 31 are parallel.

The bearing member 33 is rigid and made from metal, as mentioned above, and is configured to reinforce both the upper metal sheet 30 and the lower metal sheet 31.

Here, the metal bearing member 33 has a general corrugated shape having a plurality of ripples 40.

The metal bearing member 33 has a third thickness between around 0.1 mm and around 0.3mm. Here, the metal bearing member 33 has a third thickness equal to around 0.2mm.

Each ripple 40 is formed by a tooth 36 or a hollow 37.

The metal bearing member 33 is thus provided with a sequence of horizontal portions 39 and inclined portions 38 to form alternatively hollows 37 and teeth 36.

The shelf 5 and in particular the upper metal sheet 30, the lower metal sheet 31 and the metal bearing member 33 generally extend longitudinally and the general corrugated shape formed by the ripples 40 of the metal bearing member 33 transversally extends to the shelf 5.

The metal bearing member 33 faces at least a major portion, here the whole surface, of the upper metal sheet 30 and faces at least a major portion, here the whole surface, of the lower metal sheet 31 so that the metal bearing member 33 is configured to reinforce both the upper metal sheet 30 and the lower metal sheet 31.

The shelf 5 further comprises a first adhesive layer 41 disposed between the upper metal sheet 30 and the metal bearing member 33 and a plurality of spacers formed by rolls 42 which are embedded in the first adhesive layer 41.

The first adhesive layer 41 coats the major portion of the interior face 34 of the upper metal sheet 30 and/or the horizontal portions 39 of the metal bearing member 33 which are in the vicinity of the interior face 34 of the upper metal sheet 30.

The rolls 42 are configured to define a sufficient and predetermined thickness of the first adhesive layer 41.

The metal bearing member 33 and the upper metal sheet 30 are thus fixed together by the first adhesive layer 41.

The shelf 5 further comprises a second adhesive layer 43 disposed between the lower metal sheet 31 and the metal bearing member 33 and a plurality of spacers formed by rolls 44 which are embedded in the second adhesive layer 43.

The second adhesive layer 42 coats the major portion of the interior face 35 of the lower metal sheet 31 and/or the horizontal portions 39 of the metal bearing member 33 which are in the vicinity of the interior face 35 of the lower metal sheet 31.

The rolls 44 are configured to define a sufficient and predetermined thickness of the second adhesive layer 43.

The metal bearing member 33 and the lower metal sheet 31 are thus fixed together by the second adhesive layer 43.

We will now describe the method for manufacturing the shelf 5.

There is needed to provide the upper metal sheet 30, the lower metal sheet 31, the metal bearing member 33 and an adhesive composition made from glue and a plurality of rolls 42 and 44 embedded in the adhesive composition.

Next, there is needed to deposit a first layer 41 of the adhesive on at least a major portion of the interior face 34 of the upper metal sheet 30 and/or on the horizontal portions 39 of the metal bearing member 33 which are in the vicinity of said interior face 34; and to deposit a second layer 43 of the adhesive on at least a major portion of the interior face 35 of the lower metal sheet 31 and/or on the horizontal portions 39 of the metal bearing member 33 which are in the vicinity of said interior face 35.

The metal bearing member 33 is thus sandwiched between the first adhesive layer 41 and the second adhesive layer 43.

Next, it is needed to face the metal bearing member 33 to at least the major portion of the interior face 34 of the upper metal sheet 30 and to bring the metal bearing member 33 and the upper metal sheet 30 against each other so that the metal bearing member 33 and the upper metal sheet 30 are fixed together by the first adhesive layer 41; and to also face the metal bearing member 33 to at least the major portion of the interior face 35 of the lower metal sheet 31 and to bring the metal bearing member 33 and the lower metal sheet 31 against each other so that the metal bearing member 33 and the lower metal sheet 31 are fixed together by the second adhesive layer 42.

The shelf 5 is thus manufactured in a convenient and simple manner and has high mechanical features, in particular regarding the mechanical resistance to shear stresses. For instance, the shelf 5 has a mechanical resistance to shear stresses between around 200kg/m² and around 350kg/m². Here, the shelf 5 has a mechanical resistance to shear stresses equal to around 250kg/m².

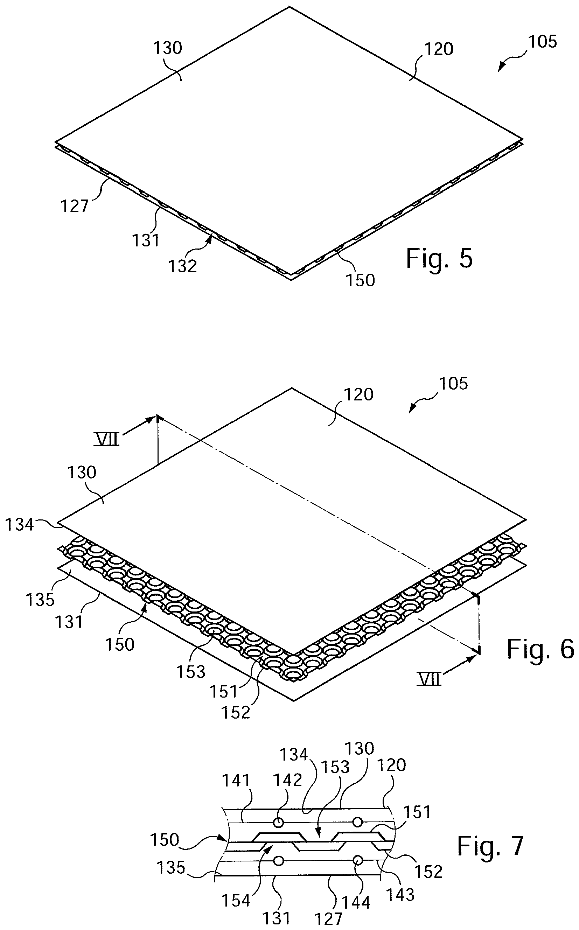

Figures 5 to 7 illustrate a variant embodiment of the shelf and are similar views to the Figures 2 to 4.

In general, we have used the same reference numbers for similar parts, but increased by 100.

The shelf 105 shown in Figures 5 to 7 is almost identical to the shelf 5 shown in Figures 2 to 4 and the method for manufacturing this shelf 105 is almost identical, except that the bearing member 150 of the shelf 105 differs from the bearing member 33 of the shelf 5.

Figure 5 partially shows the shelf 105 in an assembled state and Figure 6 partially shows the shelf 105 in an exploded state.

Further, Figure 7 partially shows the shelf 105 in section taken along VII on Figure 6.

The shelf 105 comprises an upper face 120 and a lower face 127 at the opposite of the upper face 120.

The shelf 105 comprises an upper metal sheet 130 and a lower metal sheet 131 facing the upper metal sheet 130 and a metal bearing member 150 sandwiched between the upper metal sheet 130 and the lower metal sheet 131.

The upper metal sheet 130 has an exterior face formed by the upper face 120 of the shelf 105 and an interior face 134 at the opposite of the exterior face 120; and the upper metal sheet 130 has a first thickness between around 0.1 mm and around 0.3mm, and in particular here, the upper metal sheet 130 has a first thickness equal to around 0.2mm.

The lower metal sheet 131 comprises an exterior face which forms the lower face 127 of the shelf 105 and an interior face 135 at the opposite of the exterior face 127; and the lower metal sheet 131 has a second thickness also between around 0.1mm and around 0.3mm, and in particular here, the lower metal sheet 131 has a second thickness equal to around 0.2mm.

The upper metal sheet 130 faces the lower metal sheet 131 and is remote to the latter from a predetermined distance defined by a space 132 provided between the upper metal sheet 130 and the lower metal sheet 131.

The space 132 has here a constant height so that the upper metal sheet 130 and the lower metal sheet 131 are parallel.

The bearing member 150 is semi-rigid and made from cardboard and is configured to reinforce both the upper metal sheet 130 and the lower metal sheet 131.

Here, the cardboard bearing member 150 has a general alveolus shape. The bearing member 150 comprises two layers of cardboard 151 and 152, in each of which are provided a plurality of cylindrical recesses 153 forming each an alveolus.

The cardboard bearing member 150 has a fourth thickness between around 0.1mm and around 0.3mm, and in particular here, each layer 151, 152 of the cardboard bearing member 150 has a fourth thickness equal to around 0.1mm.

The cardboard bearing member 150 faces at least a major portion, here the whole surface, of the upper metal sheet 130 and faces at least a major portion, here the whole surface, of the lower metal sheet 131 so that the cardboard bearing member 150 is configured to reinforce both the upper metal sheet 130 and the lower metal sheet 131.

The shelf 105 further comprises a first adhesive layer 141 disposed between the upper metal sheet 130 and the cardboard bearing member 133 and a plurality of spacers formed by rolls 142 which are embedded in the first adhesive layer 141.

The first adhesive layer 141 coats the major portion of the interior face 134 of the upper metal sheet 130 and/or the layer 151 facing the interior face 134 of the upper metal sheet 130.

The rolls 142 are configured to define a sufficient and predetermined thickness of the first adhesive layer 141.

The cardboard bearing member 150 and the upper metal sheet 130 are thus fixed together by the first adhesive layer 141.

The shelf 105 further comprises a second adhesive layer 143 disposed between the lower metal sheet 131 and the cardboard bearing member 150 and a plurality of spacers formed by rolls 144 which are embedded in the second adhesive layer 143.

The second adhesive layer 142 coats the major portion of the interior face 134 of the lower metal sheet 131 and/or the layer 152 of the cardboard bearing member 150 which faces the interior face 135 of the lower metal sheet 131.

The rolls 144 are configured to define a sufficient and predetermined thickness of the second adhesive layer 143.

The cardboard bearing member 150 and the lower metal sheet 131 are thus fixed together by the second adhesive layer 143.

The method for manufacturing the shelf 105 comprises the following steps.

There is needed to provide the upper metal sheet 130, the lower metal sheet 131, the cardboard bearing member 150 and an adhesive composition made from glue and a plurality of rolls 142 and 144 embedded in the adhesive composition.

Next, there is needed to deposit a first layer 141 of the adhesive on at least a major portion of the interior face 134 of the upper metal sheet 130 and/or on the cardboard layer 151 of the bearing member 150; and to deposit a second layer 143 of the adhesive on at least a major portion of the interior face 135 of the lower metal sheet 131 and/or on the cardboard layer 152 of the bearing member 150.

The cardboard bearing member 150 is thus sandwiched between the first adhesive layer 141 and the second adhesive layer 143.

Next, it is needed to face the cardboard bearing member 150 to at least the major portion of the interior face 134 of the upper metal sheet 130 and to bring the cardboard bearing member 150 and the upper metal sheet 130 against each other so that the cardboard bearing member 150 and the upper metal sheet 130 are fixed together by the first adhesive layer 141; and to face also the cardboard bearing member 150 to at least the major portion of the interior face 135 of the lower metal sheet 131 and to bring the cardboard bearing member 150 and the lower metal sheet 131 against each other so that the cardboard bearing member 150 and the lower metal sheet 131 are fixed together by the second adhesive layer 142.

The shelf 105 is thus manufactured as a convenient and simple manner and has high mechanical features, in particular regarding the mechanical resistance to shear stresses. For instance, the shelf 105 has a mechanical resistance to shear stresses between around 200kg/m² and around 350kg/m². Here, the shelf 105 has a mechanical resistance to shear stresses equal to around 250kg/m².

In variants that are not illustrated:
- the upper face, the lateral faces and the front face of the upper metal sheet are not made from a single metal sheet, but only the upper face is made from an upper metal sheet and the lateral faces and the front face of the shelf are each made from a single and distinct metal sheet which are assembled to the upper metal sheet;
- the upper sheet and/or the lower sheet has not a thickness equal to around 0.2mm but rather more or less in the range comprises between around 0.1 mm and 0.3mm;
- the space defined between the upper metal sheet and the lower metal sheet has not has a constant height, but rather the space has a first height in the vicinity of the front edge 4 and a second height in the vicinity of the back panel 26, the first height being smaller than the second height, so that the upper metal sheet and the lower metal sheet are not parallel;
- the upper sheet and/or the lower sheet has a flat surface or not a flat surface, for instance a curved surface or a warped surface;
- the shelf does not comprise a lower sheet but only an upper sheet and a bearing member fixed to the upper sheet thanks to an adhesive layer;
- at least one of the at least one first adhesive layer and the at least one second adhesive layer does not comprise rolls;
- the bearing member is not made from metal or from cardboard but rather made from plastic material;
- the bearing member does not face the whole surface of the upper sheet and/or the lower sheet but only at least a major portion smaller than the whole surface;
- the bearing member has not an alveolus shape or a corrugated shape but another shape which allows the shelf resisting to shear stresses; and/or
- the shelf according to the invention and/or the shelving device having at least one said shelf is not used in sales area but rather in storage are.

It should be noted more generally that the invention is not limited to the examples described and represented.

## Claims

1. Shelf for displaying articles, configured to be mounted on a shelving device (1), wherein said shelf (5; 105) comprises an upper metal sheet (30; 130), a bearing member (33; 150) facing to at least a major portion of said upper metal sheet (30; 130), said bearing member (33; 150) being configured to reinforce said upper metal sheet (30; 130) and at least one first adhesive layer (41; 141) disposed between said upper metal sheet (30; 130) and said bearing member (33; 150), so that said bearing member (33; 150) and said upper metal sheet (30; 130) are fixed together by said at least one first adhesive layer (41; 141); **characterised in that**, shelf further comprising at least one spacer sandwiched between said bearing member (33; 150) and said upper metal sheet (30; 130), said spacer being formed by a plurality of rolls (42; 142) embedded in said at least one first adhesive layer (41; 141).

2. Shelf according to claim 1, wherein said upper metal sheet (30; 130) has a first thickness between around 0.1 mm and around 0.3mm.

3. Shelf according to one of claims 1 and 2, wherein it further comprises a lower panel (31; 131) which is opposed to said upper metal sheet (30; 130) so that said bearing member (33; 150) is sandwiched between said lower panel (31; 131) and said upper metal sheet (30; 130).

4. Shelf according to claim 3, wherein said lower panel is formed by a lower metal sheet (31; 131) having a second thickness between around 0.1 mm and around 0.3mm.

5. Shelf according to one of claims 3 and 4, wherein it further comprises at least one second adhesive layer (43; 143) disposed between said lower panel (31; 131) and said bearing member (33; 150) so that said bearing member (33; 150) and said lower panel (31; 131) are fixed together by said at least one second adhesive layer (43; 143).

6. Shelf according to claim 5, wherein it further comprises at least one spacer (44; 144) sandwiched between said bearing member (33; 150) and said lower panel (31; 131).

7. Shelf according to claim 6, wherein said spacer is formed by a plurality of rolls (44; 144) embedded in said second adhesive layer (43; 143).

8. Shelf according to any one of claims 1 to 7, wherein it generally extends longitudinally and said bearing member (33) comprises a plurality of ripples (40) so that said bearing member (33) has a general corrugated shape which transversally extends to said shelf (5).

9. Shelf according to any one of claims 1 to 7, wherein said bearing member (150) has a general alveolus shape.

10. Shelf according to any one of claims 1 to 9, wherein said bearing member (33) is rigid and made from metal.

11. Shelf according to any one of claims 1 to 9, wherein said bearing member (150) is semi-rigid and made from cardboard.

12. Shelf according to any one of claims 1 to 11, wherein it generally extends longitudinally and has lateral faces (21, 22) having a right-angled triangle shape.

13. Shelving device comprising a base (2), a back panel (4) extending from said base (2) and at least one shelf (5; 105) according to any one of claims 1 to 12 which is mounted on said back panel (4) and which overhangs said base (2).

14. Method for manufacturing a shelf (5; 105) according to any one of claims 1 to 12, comprising the following steps:
- providing an upper metal sheet (30; 130);
- providing a bearing member (33; 150) configured to reinforce said upper metal sheet (30; 130);
- providing an adhesive and depositing at least one first layer (41; 141) of said adhesive on at least a major portion of said upper metal sheet (30; 130) and/or on said bearing member (33; 150); **characterised in that**, said at least one first adhesive layer (41; 141) comprises spacers which are formed by a plurality of rolls (42; 142) embedded in said at least one first adhesive layer (41; 141);
- facing said bearing member (33; 150) to at least a major portion of said upper metal sheet (30; 130) and bringing said bearing member (33; 150) and said upper metal sheet (30; 130) against each other so that said spacers are sandwiched between said bearing member (33; 150) and said upper metal sheet (30; 130) and said bearing member (33; 150) and said upper metal sheet (30; 130) are fixed together by said at least one first adhesive layer (41; 141).

15. Method according to claim 12, wherein it further comprises the following steps:
- providing a lower metal sheet (31; 131);
- providing an adhesive and depositing at least one second layer (43; 143) of said adhesive on at least a major portion of said lower metal sheet (31; 131) and/or on said bearing member (33; 150) at an opposite side to said at least one first adhesive layer (43; 143); wherein said at least one second adhesive layer (43; 143) comprises spacers which are formed by a plurality of rolls (44; 144) embedded in said at least one second adhesive layer (43; 143);
- facing said bearing member (33; 150) to at least a major portion of said lower metal sheet (31; 131) and bringing said bearing member (33; 150) and said lower metal sheet (31; 131) against each other so that said spacers are sandwiched between said bearing member (33; 150) and said lower metal sheet (31; 131) and said bearing member (33; 150) and said lower metal sheet (31; 131) are fixed together by said at least one second adhesive layer (43; 143).

## Patentansprüche

1. Ablage zum Ausstellen von Artikeln, die zur Montage an einer Regalvorrichtung (1) ausgebildet ist, wobei die Ablage (5; 105) ein oberes Metallblech (30; 130), ein zumindest einem größeren Teil des oberen Metallblechs (30; 130) zugewandtes Tragelement (33; 150), wobei das Tragelement (33; 150) dazu ausgebildet ist, das obere Metallblech (30; 130) zu verstärken, und wenigstens eine erste Klebstoffschicht (41; 141) aufweist, die zwischen dem oberen Metallblech (30; 130) und dem Tragelement (33; 150) angeordnet ist, so dass das Tragelement (33; 150) und das obere Metallblech (30; 130) durch die wenigstens eine erste Klebstoffschicht (41; 141) aneinander befestig sind, **dadurch gekennzeichnet, dass**
die Ablage ferner wenigstens einen Abstandshalter aufweist, der sandwichartig zwischen dem Tragelement (33; 150) und dem oberen Metallblech (30; 130) angeordnet ist, wobei der Abstandshalter von einer Mehrzahl von in der wenigstens einen ersten Klebstoffschicht (41; 141) eingebetteten Rollen (42; 142) gebildet wird.

2. Ablage nach Anspruch 1, wobei das obere Metallblech (30; 130) eine erste Dicke zwischen ungefähr 0.1 mm und ungefähr 0.3 mm aufweist.

3. Ablage nach einem der Ansprüche 1 und 2, wobei sie ferner eine untere Tafel (31; 131) aufweist, die dem oberen Metallblech (30; 130) gegenüberliegt, so dass das Tragelement (33; 150) sandwichartig zwischen der unteren Tafel (31; 131) und dem oberen Metallblech (30; 130) angeordnet ist.

4. Ablage nach Anspruch 3, wobei die untere Tafel durch ein unteres Metallblech (31; 131) gebildet wird, das eine zweite Dicke zwischen ungefähr 0.1 mm und ungefähr 0.3 mm aufweist.

5. Ablage nach einem der Ansprüche 3 und 4, wobei sie ferner wenigstens eine zweite Klebstoffschicht (43; 143) aufweist, die zwischen der unteren Tafel (31; 131) und dem Tragelement (33; 150) angeordnet ist, so dass das Tragelement (33; 150) und die untere Tafel (31; 131) durch die wenigstens eine zweite Klebstoffschicht (43; 143) aneinander befestig sind.

6. Ablage nach Anspruch 5, wobei sie ferner wenigstens einen Abstandshalter (44; 144) aufweist, der sandwichartig zwischen dem Tragelement (33; 150) und der unteren Tafel (31; 131) angeordnet ist.

7. Ablage nach Anspruch 6, wobei der Abstandshalter von einer Mehrzahl von in der zweiten Klebstoffschicht (43; 143) eingebetteten Rollen (44; 144) gebildet wird.

8. Ablage nach einem beliebigen der Ansprüche 1 bis 7, wobei sich die Ablage im Wesentlichen in Längsrichtung erstreckt und das Tragelement (33) eine Mehrzahl von Wellen (40) aufweist, so dass das Tragelement (33) eine sich quer zur Ablage (5) erstreckende, im Wesentlichen gewellte Form aufweist.

9. Ablage nach einem beliebigen der Ansprüche 1 bis 7, wobei das Tragelement (150) eine im Wesentlichen aus kleinen Mulden bestehende Form aufweist.

10. Ablage nach einem beliebigen der Ansprüche 1 bis 9, wobei das Tragelement (33) steif ist und aus Metall besteht.

11. Ablage nach einem beliebigen der Ansprüche 1 bis 9, wobei das Tragelement (150) halbsteif ist und aus Pappkarton besteht.

12. Ablage nach einem beliebigen der Ansprüche 1 bis 11, wobei sie sich im Wesentlichen in Längsrichtung erstreckt und Seitenflächen (21, 22) aufweist, die die Form eines rechtwinkligen Dreiecks haben.

13. Regalvorrichtung mit einem Sockel (2), einer sich von dem Sockel (2) aus erstreckenden Rückwand (4) und wenigstens einer Ablage (5; 105) nach einem beliebigen der Ansprüche 1 bis 12, die an der Rückwand (4) montiert ist und über den Sockel (2) vorspringt.

14. Verfahren zum Herstellen einer Ablage (5; 105) nach einem beliebigen der Ansprüche 1 bis 12, das die folgenden Schritte aufweist:
- Bereitstellen eines oberen Metallblechs (30; 130);
- Bereitstellen eines Tragelements (33; 150), das dazu ausgebildet ist, das obere Metallblech (30; 130) zu verstärken;
- Bereitstellen eines Klebstoffs und Auftragen wenigstens einer ersten Schicht (41; 141) des Klebstoffs auf zumindest einen größeren Teil des oberen Metallblechs (30; 130) und/oder auf das Tragelement (33; 150); **dadurch gekennzeichnet, dass** die wenigstens eine erste Klebstoffschicht (41; 141) Abstandshalter aufweist, die von einer Mehrzahl von in der wenigstens einen ersten Klebstoffschicht (41; 141) eingebetteten Rollen (42; 142) gebildet werden;
- wobei das Tragelement (33; 150) so angeordnet wird, dass es zumindest einem größeren Teil des oberen Metallblechs (30; 130) zugewandt ist, und das Tragelement (33; 150) und das obere Metallblech (30; 130) so gegeneinander gebracht werden, dass die Abstandshalter sandwichartig zwischen dem Tragelement (33; 150) und dem oberen Metallblech (30; 130) angeordnet werden und das Tragelement (33; 150) und das obere Metallblech (30; 130) durch die wenigstens eine erste Klebstoffschicht (41; 141) aneinander befestigt werden.

15. Verfahren nach Anspruch 12, wobei das Verfahren ferner die folgenden Schritte aufweist:
- Bereitstellen eines unteren Metallblechs (31; 131);
- Bereitstellen eines Klebstoffs und Auftragen wenigstens einer zweiten Schicht (43; 143) des Klebstoffs auf zumindest einen größeren Teil des unteren Metallblechs (31; 131) und/oder auf das Tragelement (33; 150) auf einer der mindestens einen ersten Klebstoffschicht (43; 143) gegenüberliegenden Seite; wobei die mindestens eine zweite Klebstoffschicht (43; 143) Abstandshalter aufweist, die von einer Mehrzahl von in der wenigstens einen zweiten Klebstoffschicht (43; 143) eingebetteten Rollen (44; 144) gebildet werden;
- wobei das Tragelement (33; 150) so angeordnet wird, dass es zumindest einem größeren Teil des unteren Metallblechs (31; 131) zugewandt ist, und das Tragelement (33; 150) und das untere Metallblech (31; 131) so gegeneinander gebracht werden, dass die Abstandshalter sandwichartig zwischen dem Tragelement (33; 150) und dem unteren Metallblech (31; 131) angeordnet werden und das Tragelement (33; 150) und das untere Metallblech (31; 131) durch die wenigstens eine zweite Klebstoffschicht (43; 143) aneinander befestigt werden.

## Revendications

1. Tablette pour présenter des articles, configurée pour être montée sur un dispositif de rayonnage (1), ladite tablette (5 ; 105) comprenant une feuille de métal supérieure (30 ; 130), un organe porteur (33 ; 150) en regard d'au moins une majeure partie de ladite feuille de métal supérieure (30 ; 130), ledit organe porteur (33 ; 150) étant configuré pour renforcer ladite feuille de métal supérieure (30 ; 130) et au moins une première couche adhésive (41 ; 141) disposée entre ladite feuille de métal supérieure (30 ; 130) et ledit organe porteur (33 ; 150), de sorte que ledit organe porteur (33 ; 150) et ladite feuille de métal supérieure (30 ; 130) sont fixés l'un à l'autre par ladite au moins une première couche adhésive (41 ; 141) ; **caractérisée en ce que** la tablette comprend, en outre, au moins un écarteur pris en sandwich entre ledit organe porteur (33 ; 150) et ladite feuille de métal supérieure (30 ; 130), ledit écarteur étant formé par une pluralité de billes (42 ; 142) incorporées dans ladite au moins une première couche adhésive (41 ; 141).

2. Tablette selon la revendication 1, dans laquelle ladite feuille de métal supérieure (30 ; 130) a une première épaisseur comprise entre environ 0,1 mm et environ 0,3 mm.

3. Tablette selon l'une des revendications 1 et 2, comprenant, en outre, un panneau inférieur (31 ; 131) qui est opposé à ladite feuille de métal supérieure (30 ; 130) de sorte que ledit organe porteur (33 ; 150) est pris en sandwich entre ledit panneau inférieur (31 ; 131) et ladite feuille de métal supérieure (30 ; 130).

4. Tablette selon la revendication 3, dans laquelle ledit panneau inférieur est formé par une feuille de métal inférieure (31 ; 131) ayant une seconde épaisseur comprise entre environ 0,1 mm et environ 0,3 mm.

5. Tablette selon l'une des revendications 3 et 4, comprenant, en outre, au moins une seconde couche adhésive (43 ; 143) disposée entre ledit panneau inférieur (31 ; 131) et ledit organe porteur (33 ; 150), de sorte que ledit organe porteur (33 ; 150) et ledit panneau inférieur (31 ; 131) sont fixés l'un à l'autre par ladite au moins une seconde couche adhésive (43 ; 143).

6. Tablette selon la revendication 5, comprenant, en outre, au moins un écarteur (44 ; 144) pris en sandwich entre ledit organe porteur (33 ; 150) et ledit panneau inférieur (31 ; 131).

7. Tablette selon la revendication 6, dans laquelle ledit écarteur est formé par une pluralité de billes (44 ; 144) incorporées dans ladite seconde couche adhésive (43 ; 143).

8. Tablette selon l'une quelconque des revendications 1 à 7, la tablette s'étendant généralement longitudinalement et ledit organe porteur (33) comprenant une pluralité d'ondulations (40) de sorte que ledit organe porteur (33) a une forme générale ondulée qui s'étend transversalement à ladite tablette (5).

9. Tablette selon l'une quelconque des revendications 1 à 7, dans laquelle ledit organe porteur (150) a une forme générale alvéolaire.

10. Tablette selon l'une quelconque des revendications 1 à 9, dans laquelle ledit organe porteur (33) est rigide et réalisé en métal.

11. Tablette selon l'une quelconque des revendications 1 à 9, dans laquelle ledit organe porteur (150) est semi-rigide et réalisé en carton.

12. Tablette selon l'une quelconque des revendications 1 à 11, la tablette s'étendant généralement longitudinalement et présentant des faces latérales (21, 22) ayant une forme de triangle rectangle.

13. Dispositif de rayonnage comprenant une base (2), un panneau de fond (4) s'étendant depuis ladite base (2) et au moins une tablette (5 ; 105) selon l'une quelconque des revendications 1 à 12 qui est montée sur ledit panneau de fond (4) et qui surplombe ladite base (2).

14. Procédé pour fabriquer une tablette (5 ; 105) selon l'une quelconque des revendications 1 à 12, comprenant les étapes consistant à :
- fournir une feuille de métal supérieure (30 ; 130) ;
- fournir un organe porteur (33 ; 150) configuré pour renforcer ladite feuille de métal supérieure (30 ; 130) ;
- fournir un adhésif et déposer au moins une première couche (41 ; 141) dudit adhésif sur au moins une majeure partie de ladite feuille de métal supérieure (30 ; 130) et/ou sur ledit organe porteur (33 ; 150) ; **caractérisé en ce que** ladite au moins une première couche adhésive (41 ; 141) comprend des écarteurs qui sont formés par une pluralité de billes (42 ; 142) incorporées dans ladite au moins une première couche adhésive (41 ; 141) ;
- mettre ledit organe porteur (33 ; 150) en regard d'au moins une majeure partie de ladite feuille de métal supérieure (30 ; 130) et amener ledit organe porteur (33 ; 150) et ladite feuille de métal supérieure (30 ; 130) l'un contre l'autre de sorte que lesdits écarteurs sont pris en sandwich entre ledit organe porteur (33 ; 150) et ladite feuille de métal supérieure (30 ; 130) et ledit organe porteur (33 ; 150) et ladite feuille de métal supérieure (30 ; 130) sont fixés l'un à l'autre par ladite au moins une première couche adhésive (41 ; 141).

15. Procédé selon la revendication 12, le procédé comprenant, en outre, les étapes suivantes consistant à :
- fournir une feuille de métal inférieure (31 ; 131) ;
- fournir un adhésif et déposer au moins une seconde couche (43 ; 143) dudit adhésif sur au moins une majeure partie de ladite feuille de métal inférieure (31 ; 131) et/ou sur ledit organe porteur (33 ; 150) sur un côté opposé à ladite au moins une première couche adhésive (43 ; 143) ; ladite au moins une seconde couche adhésive (43 ; 143) comprenant des écarteurs qui sont formés par une pluralité de billes (44 ; 144) incorporées dans ladite au moins une seconde couche adhésive (43 ; 143) ;
- mettre ledit organe porteur (33 ; 150) en regard d'au moins une partie principale de ladite feuille de métal inférieure (31 ; 131) et amener ledit organe porteur (33 ; 150) et ladite feuille de métal inférieure (31 ; 131) l'un contre l'autre de sorte que lesdits écarteurs sont pris en sandwich entre ledit organe porteur (33 ; 150) et ladite feuille de métal inférieure (31 ; 131) et ledit organe porteur (33 ; 150) et ladite feuille de métal inférieure (31 ; 131) sont fixés l'un à l'autre par ladite au moins une seconde couche adhésive (43 ; 143).
